(19) Europäisches Patentamt

European Patent Office

Office européen des brevets

(11) Veröffentlichungsnummer: **0 268 172**
**A1**

## (12) EUROPÄISCHE PATENTANMELDUNG

(21) Anmeldenummer: 87116487.7

(22) Anmeldetag: 07.11.87

(51) Int. Cl.⁴: **B22C 1/20** , B22C 9/12

(30) Priorität: **20.11.86 DE 3639233**

(43) Veröffentlichungstag der Anmeldung:
**25.05.88 Patentblatt 88/21**

(84) Benannte Vertragsstaaten:
**ES GR**

(71) Anmelder: **Hüttenes-Albertus**
**Chemische-Werke GmbH**
**Wiesenstrasse 23-64**
**D-4000 Düsseldorf-Heerdt 11(DE)**

(72) Erfinder: **Torbus, Marek, Dr.**
**Merowinger Strasse 31**
**D-4000 Düsseldorf(DE)**
Erfinder: **Ladegourdie, Gerard**
**Am Haverkamp 121**
**D-4044 Kaarst 1(DE)**
Erfinder: **Vujevic, Aleksandar**
**Rua José de Campos Sales 153**
**BR-13100 Campinas(BR)**
Erfinder: **Seiss, Willi, Dr.**
**Momsenstrasse 22**
**D-4040 Neuss-Allerheiligen(DE)**
Erfinder: **Jerman, Franz, Dr.**
**Kanzlerstrasse 10B**
**D-4000 Düsseldorf 30(DE)**
Erfinder: **Lingemann, Dirk**
**Löhrer Strasse 3**
**D-4040 Neuss(DE)**

(74) Vertreter: **Eikenberg & Brümmerstedt**
**Patentanwälte**
**Schackstrasse 1**
**D-3000 Hannover 1(DE)**

(54) Kalthärtendes Formstoff-Bindemittel und dessen Verwendung.

㊾ Das Bindemittels dient zur Herstellung von Gießerei-Formteilen und umfaßt eine Lösung (bevorzugt eine wässrige Lösung) von aldehyd-reaktiven Phenolkörpern sowie gasförmige Acetale (bevorzugt Dimethylformal) als Reaktionspartner und starke Säuren, z.B. Schwefelsäure und/oder Solfonsäuren als Katalysator. Das Acetal wird in diesem System durch die Säure hydrolysiert, wobei sich der zugrundeliegende Aldehyd bildet, der mit dem aldehyd-reaktiven Phenolkörper unter Vernetzung reagiert. Die Säure dient dabei zugleich als Vernetzungskatalysator. Als "aldehyd-raktive Phenolkörper" kommen im Proinzip alle phenolischen Verbindungen in Betracht, die im sauren Bereich mit Aldehyden mehr oder weniger spontan vernetzen können. Bevorzugt sind dies Resorcin oder Resorcinprodukte, z.B. Resorcinpech oder aber mit Unterschuß an Aldehyd gebildete Vorkondensate z. B. auf der Basis Resorcin-Formaldehyd, Phenol-Resorcin-Formaldehyd bzw. ResorcinMelamin-Formaldehyd.

Zur Herstellung von Gießerei-Formteilen wird aus einem körnigen Formengrundstoff, z.B. Sand, der Lösung des aldehyd-reaktiven Phenolkörpers und der Säure eine formstoffmischung hergestellt, die dann durch Durchleiten des gasförmigen Acetals (Formals) zur Aushärtung gebracht wird. Die dabei ablaufende Aldehyd-

Vernetzung des aldehyd-reaktiven Phenolkörpers im sauren Medium führt zu Duroplasten (Resiten), die eine sehr gute thermische Beständigkeit und eine geringe Schadstoffemission beim Abguß mit einer hohe Festigkeit mit einer vernachlässigbaren Feuchtigkeitsempfindlichkeit der hergestellten Formteile verbinden und dadurch ausgesprochen vorteilhaft sind.

## Kalthärtendes Formstoff-Bindemittel und dessen Verwendung

Bei der Herstellung von Gießerei-Formteilen haben kalthärtende Bindemittel eine zunehmende Bedeutung gewonnen. Sie bieten gegenüber heißärtenden Bindemitteln eindeutige Vorteile, insbesondere eine höhere Produktivität bei besseren Arbeitsbedingungen und geringerem Energiebedarf. Diese kalthärtenden Bindemittel bestehen durchweg aus einem vernetzbaren Reaktionssystem, das mit einem Formengrundstoff (z. B. Quarzsand, Zirkonsand, Chromitsand oder Mischungen daraus) zu einer Formstoffmischung verarbeitet wird und dann mit Hilfe eines Katalysators zu einem festen hochvernetzten Polymer reagiert. Der Katalysator wird dabei in vielen Fällen der fertig abgeformeten Formstoffmischung nachträglich als Gas zugeführt, kann aber auch zusammen mit dem Reaktionssystem in die Formstoffmischung eingearbeitet sein.

Typische Beispiele für gießereitechnische Arbeitsverfahren mit kalthärtenden Bindemitteln sind bei Zufuhr eines gasförmigen Katalysators das Coldbox-Verfahren (Isocyanatvernetzung von Polyolen unter Einwirkung gasförmiger tertiärer Amine), das $SO_2$-Verfahren, das $CO_2$-Verfahren oder das Formiat-Verfahren, und bei Einarbeitung des Katalysators in die Formstoffmischung das Pepset-Verfahren (Isocyanatvernetzung von Polyolen unter Ein wirkung höherer Amine). Von diesen Verfahren hat das Coldbox-Verfahren seit etwa 20 Jahren die breiteste Anwendung gefunden. Es wurde in dieser Zeit ständig verbessert, besitzt aber dennoch eine Anzahl von weitgehend unvermeidbaren Nachteilen, von denen einige darauf zurückgehen, daß das bei der Vernetzung gebildete Polyurethan ein Thermoplast ist, der eine relativ geringe thermische Beständigkeit und eine relativ hohe Schadstoffemission beim Abguß besitzt und auch sehr feuchtigkeitsempfindlich ist. Außerdem ist die sog. "Sandlebenszeit", d. h. die Zeitdauer, innerhalb der eine Formstoffmischung verarbeitbar bleibt, ziemlich kurz, der Einsatz von Altsanden ist problematisch und die Polyole müssen in organischen Lösungsmitteln gelöst werden. Die anderen kalthärtenden Verfahren sind aufgrund noch größerer Nachteile in der Praxis weniger stark verbreitet, denn beim Formiat-Verfahren sind die erreichbaren Festigkeiten zu gering, beim $SO_2$-Verfahren spricht die problematische Handhabung von Peroxiden und $SO_2$-Gas gegen einen verstärkten Einsatz, und dem $CO_2$-Verfahren stehen eine geringe Produktivität und eine sehr schlechte Zerfallbarkeit der Formteile nach dem Abguß entgegen.

Somit besteht in der Gießereiindustrie nach wie vor ein Bedarf an einem Bindemittel mit verbesserten Eigenschaften. Mit der Erfindung wird diesem Bedarf entsprochen und der Praxis ein verbessertes Bindemittel zur Verfügung gestellt, welches sich erfindungsgemäß dadurch kennzeichnet, daß es eine Lösung von aldehyd-reaktiven Phenolkörpern sowie gasförmige Acetale als Reaktionspartner und starke Säuren als katalysatoren umfaßt, wobei die Phenolkörper und die Säuren in der Formstoffmischung vorgelegt und die Acetale der abgeformten Formstoffmischung zugeführt sind.

Es ist bekannt, daß ein aldehyd-reaktiver Phenolkörper in Gegenwart eines Aldehyds (vorzugsweise Formaldehyd) durch Zugabe einer starken Säure kalt zur Aushärtung gebracht werden kann, und es ist weiterhin bekannt, daß Acetale zwar im alkali schen Bereich stabil sind, im sauren Bereich jedoch leicht in die entsprechenden Alkohole und Aldehyde hydrolysieren. Mit der Erfindung werden diese beiden Tatsachen miteinander in Beziehung gebracht und konsequent zur Schaffung eines neuartigen Bindemittels ausgenutzt, indem eine den Phenolkörper und die Säure enthaltende Formstoffmischung nach der Ausformung mit ienem gasförmigen Acetal als Aldehydspender begast wird. Die Säure hat dabei eine doppelte Funktion, sie bewirkt die Hydolyse des Acetals und katalysiert zugleich die Vernetzung des Phenolkörper durch das aus dem Acetal freigesetzte Aldehyd. Dabei wurde gefunden, daß sich auf diese Weise ein Bindemittel mit in jeder Hinsicht überraschend guten Eigenschaften und mit vielfältigen Vorteilen ergibt, die sich sowohl auf die Herstellung und Handhabung der Formstoffmischung als auch auf die Formenteile und deren Einsatz beim Gießvorgang erstrecken. Somit ist das Bindemittel für einen Einsatz zur Herstellung von Gießerei-Formteilen gradezu prädestiniert.

Die vorteilhaften Eigenschaften der ausgehärteten Formteile leiten sich im wesentlichen daraus ab, daß die Aldehyd-Vernetzung der aldehyd-reaktiven Phenolkörper im sauren Medium zu Duroplasten führt. Dadurch besitzen die mit dem erfindungsgemäßen Bindemittel hergestellten Formteile hohe Festigkeiten, insbesondere auch gute Anfangsfestigkeiten, und eine vernachlässigbare Feuchtigkeitsempfindlichkeit, können also problemlos gelagert werden. Außerdem weisen sie eine sehr gute thermische Beständigkeit auf. Weiterhin ist die Schadstoffemission nach dem Abguß äußerst gering, lästige Schwelgase treten praktisch überhaupt nicht mehr auf. Auch ist die Zerfallbarkeit der Formteile nach dem Abguß sehr gut, so daß kein besonderer Aufwand für das Entformen der Gußstücke erforderlich ist.

Als "aldehyd-reaktive Phenolkörper" sind im Rahmen der Erfindung alle solchen Verbindungen mit phenolischen OH-Gruppen - einzeln oder im Gemisch imteinander - zu verstehen, die in der Lage sind, mit Aldehyden im sauren Medium mehr oder weniger spon tan unter Vernetzung zu reagieren. Insbesondere fallen unter diesen Begriff Phenol, alkyl-substituierte und/oder hydroxy-substituierte Phenole, Naphthole, Bisphenole usw. sowie die daraus mit einem Unterschuß an Aldehyd (vorzugsweise Formaldehyd) gebildeten Vorkondensate. Diese Vorkondensate sind lösliche, im suaren Medium beständige Produkte, die erst durch Zufuhr von weiterem, aus dem Acetal stammenden Aldehyd zur Aushärtung gelangen. Sie besitzen gegenüber den nicht vorkondensierten Phenolkörpern den Vorteil einer größeren Härtungsgeschwindigkeit bei geringerem Acetalverbrauch und führen normalerweise zu höheren Festigkeiten der ausgehärteten Formteile. Die Aldehyd-Reaktivität ermitteln, so daß der Fachman ohne weiteres einen für den jeweiligen Anwendungsfall geeigneten Phenolkörper auswählen kann.

Die Phenolkörper kommen in Form einer Lösung zum Einsatz, die nachfolgend auch als "Harzlösung" bezeichnet wird. Dabei kann sogar Wasser als Lösungsmittel (ggfs im Gemisch mit nicht-wässrigen Lösungmitteln, insbesondere Alkoholen) verwendet werden, was im Vergleich zu den bisher erforderlichen organischen Lösungmiteln ein erheblicher weiterer Vorteil und deshalb bevorzugt ist. Demgemäß sind auch die aldehyd-reaktiven Phenolkörper bevorzugt wasserlösliche oder wasserverdünnbare Produkte. Der Feststoffgehalt der Harzlösung sollte nicht zu gering eingestellt sein, um ausreichende Festigkeiten der hergestellten Formkörper zu gewährleisten. Als zweckmäßig haben sich Geststoffgehalte von etwa 50 - 95 Gew.% erwiesen, wobei die obere Grenze durch die Löslichkeit bzw. Verdünnbarkeit der Phenolkörper bestimmt wird, aber auch von der viskosität der Harzlösung abhängt, denn eine zu hohe Viskosität erschwert die gleichmäßige Verteilung beim Einmischen in diese Formstoffmischung. Die Harzlösung kann in den in der Gießereitechnik üblichen Mengen von etwa 0,5 - Gew.%, bezogen auf die Formstoffmischung, zum Einsatz kommen.

Als besonders geeignete Phenolkörper haben sich Resorcin oder Resorcinprodukte erwiesen, z.B. das bei der Resorcin-Destillation anfallende Resorcinpech oder ein wasserlösliches Vorkondensat (mit Formaldehyd-Unterschuß) auf der Basis Resorcin-Formaldehyd oder auch Phenol-Resorcin-Formaldehyd. Dabei kann auch ein Teil (bis zu etwa 40 Gew.-%) des Resorcins durch solche nichtphenolischen aldehyd-reaktiven Verbindungen ersetzt sein, die mit Formaldehyd zu Aminoplasten reagieren können, insbesondere Melamin und Melamin-Formaldehyd-Vorkondensate. Resorcin und resorcinhaltige Vorkondensate reagieren mit Formaldehyd unter Bildung von hochvernetzten Phenolharzen, wobei die Reaktion schon in der Kälte bei nur geringer Säurezugabe zur Resitstufe führt, ohne daß Resole oder Resitole als Zwischenstufen isolierbar sind. Das Resorcinpech, das gegenüber Resorcin einen beachtlichen wirtschaftlichen Vorteil bietet, ist ebenfalls wasserlöslich und reagiert ebenfalls zu unschmelzbaren Resiten. Da andrerseits eine Resitbildung die Grundlage von heißhärtenden Bindemitteln ist, die z. B. nach dem Hotbox-Verfahren verarbeitet werden, vereinigt das erfindungsgemäße System im Ergebnis somit die Vorteile der Coldbox-Bindemittel mit denen der Hotbox-Bindemittel, ohne deren jeweilige Nachteile aufzuweisen.

Hinsichtlich der Säure werden mit Schwefelsäure und/oder Sulfonsäuren - einzeln oder im Gemisch miteinander - die besten Ergebnisse bei der Aushärtung erzielt. An Sulfonsäuren kommen insbesondere aromatische Sulfonsäuren wie Phenolsulfonsäure, Toluolsulfonsäure, Benzolsulfonsäure, Xylolsulfonsäure oder Cumolsulfonsäure in Betracht, aber andere Sulfonsäuren wie Methansulfonsäure sind nicht ausgeschlossen. Die aromatischen Sulfonsäuren wie Phenolsulfonsäure können dabei auch mit Formaldehyd im Unterschuß zu einem Vorkondensat umgesetzt werden, das in wässriger Lösung, ggfs. mit einem Zusatz von Schwefelsäure, zum Einsatz kommt. In jedem Fall muß die Säure in ausreichender Menge in der Formstoffmischung anwesend sein, um die Hydolyse des Acetals und die Aushärtung des Phenolkörpers bewirken zu können, sollte aber nicht im unnötigen Überschuß vorliegen. Als zweckmäßig hat sich ein Verhältnis von 1 Gewichtsteil Säure auf 1-3 Gewichteile Harzlösung erwiesen. Die Zugabe der Säure zur Formstoffmischung erfolgt vorzugsweise gleichzeitig mit der Zugabe der Harzlösung.

Für die Begasung werden bevorzugt leicht flüchtige Acetale eingesetzt, insbesondere 1,3-Dioxolan sowie die auch als "Formale" bezeichneten Acetale des Formaldehyds mit Alkohol-Komponenten bis zu 4 C-Atomen. Typische Beispiele sind Dimethylformal, Diethylformal, di-n-propylformal, Diisopropylformal, Di-n-butylformal, Diisobutylformal, Di-tert.-butylformal usw., aber auch Formale aus zwei verschiedenen Alkoholen wie Methylethylformal, Methylisopropylformal, Ethylisopropylformal usw. Diese Acetale, die einzeln oder im Gemisch miteinander zum Einsatz kommen können, haben einen angenehmen Geruch und einen relativ hohen MAK-Wert (z. B. 1000 ppm MAK für Dimethylformal).

Der Harzlösung bzw. der diese enthaltenden Formstoffmischung können noch Silane, Glycole oder andere übliche Zusätze zugemischt werden. Auch kann eine Zugabe geringer Mengen von Aminoplasten, z.B. eines Melaminharzes zweckmäßig sein, die insbesondere bei monomeren Phenolkörpern gewissermaßen als "Impfpolymer" wirken.

Die Herstellung von Gießerei-Formteilen, z.B. Kernen, erfolgt mit dem erfindungsgemäßen Bindemittel derart, daß eine Formstoffmischung mit der Harzlösung und der Säure vermischt und dann durch Durchleiten eines verdampfbaren Acetals (mit z. B. Luft, $CO_2$ oder Stickstoff als Trägergas) zur Aushärtung

4

gebracht wird. Hierbei ergeben sich extrem lange Sandlebenszeiten, weil nicht mehr - wie bisher - der katalysator, sondern nunmehr ein Bestandteil des reaktivèn Systems über das Gas zugeführt wird, in der Formstoffmischung also keine nennenswerten Vorab-Reaktionen ablaufen können. die Begasung kann in den gleichen Geräten durchgeführt werden, die z. B. für das Coldbox-Verfahren entwickelt wurden, wobei lediglich darauf zu achten ist, daß das Acetal in der Gasphase verbeleibt und nicht vorzeitig zur Kondensation gelangt. Aus diesem Grunde ist es zweckmäßig, die Werkzeuge (Kernakästen) auf einer Temperatur von etwa 20 - 50°C zu halten. Der während der Begasung in der Formstoffmischung freigesetzte Formaldehyd sorgt für eine sekundenschnelle Aushärtung und wird bei der Aushärtung verbraucht, hinterläßt also keine Rückstände in der Atmosphäre. Da auch bevorzugt keine organischen Lösungsmittel anwesend sind, entfällt insgesamt sowohl bei der Kernherstellung als auch bei der Lagerung der Kerne oder der Lagerung der Formstoffmischung jegliche Geruchsbelästigung.

Die nachfolgenden Beispiele erläutern die Erfindung, wobei "GT" jeweils Gewichtsteile bedeuten.

## Beispiel 1

In einem Rührkessel wurde 30 GT Resorcin, 30 GT Resorcinpech, 10 GT Melaminharz (Kauramin 700 der Firma BASF) und 30 GT Wasser zu einer wässrigen Lösung vermischt, die noch mit 0,2 Gew.-% Aminosilan (A 1100 der Firma Union Carbide) versetzt wurde. Diese Lösung wird nachfolgend als "Harzlösung 1" bezeichnet.

Aus 100 GT Quarzsand H 33, 1,5 GT der Harzlösung 1 und 0,5 GT Schwefelsäure (96 %ig) wurde eine Formstoffmischung hergestellt, wobei wegen der niedrigen Viscosität der beiden Sandzusätze übliche Schnellmischer als Mischaggregate eingesetzt werden konnten. Die Formstoffmischung wurde sodann in Analogie zum Coldbox-Verfahren nach DIN 52401 mit einer Schießmaschine zu Prüfkörpern (Kernen) verarbeitet, die anschließend durch Begasung mit Dimethylformal gehärtet wurden. Als Trägergas wurde dabei Luft mit einer Temperatur von 80°C verwendet, und die Kernkästen wurden auf 35°C erwärmt. Die Begasungszeit betrug 2,5 sec. gefolgt von einer Spülzeit von 15 sec.

Bei der anschließenden Untersuchung der so hergestellten Prüfkörper wurden die in der beigefügten Tabelle angegebenen Werte ermittelt. In dieser Tabelle beziehen sich die beiden Hauptspalten "Mischung sofort verarbeitet" und "Mischung 4 h gelagert" auf unterschiedliche Lagerzeiten der Mischung, um die ausgezeichnete Sandlebenszeit zu veranschaulichen. Dazu wirde ein Teil der Mischung sofort nach ihrer Fertigstellung zu den Prüfkörpern verarbeitet, während ein anderer Teil zunächst 4 h lang gelagert wurde, bevor die Herstellung der Prüfkörper erfolgte. In beiden Fällen wirde jeweils ein Teil der Prüfkörper innerhalb von 15 sec (sofort) bzw. innerhalb von 1 h nach Beendigung des Begasens geprüft, um die guten Anfangsfestigkeiten der Prüfkörper und die Entwicklung der Endfestigkeiten zu zeigen.

## Beispiel 2

In einem Reaktor wurden 563,6 GT Resorcin, 77,0 GT Wasser und 3,4 GT Zinkacetat auf 70°C erwärmt, bis eine homogene Lösung entstand. Dann wurden innerhalb einer Stunde 103,8 GT Formalin (37 %ig) zugegeben, wobei darauf geachtet wurde, daß die Temperatur von 70°C nicht überschritten wurde. 15 min nach Beendigung der Formalinzugabe wurden 164 GT Resorcinpech eingerührt, bis es sich vollständig aufgelöst hatte. Danach wurde auf etwa 40°C abgekühlt und noch 58,2 GT Melaminharz (Luwipal 066) sowie 30 GT Monoethylenglycol und 4 GT Aminosilan (Dynasilan 1411 der Firma Dynamit Nobel) zugegeben. Nach kurzem Rühren entstand eine homogene Lösung, die nachfolgend als "Harzlösung 2" bezeichnet wird.

In einem weiteren Reaktor wurden 450,6 GT p-Phenolsulfonsäure (94 %ig) vorgelegt und auf 70°C aufgeheizt, bis alles geschmolzen war. Dann wurden innerhalb von 1,5 h 49,4 GT Formalin (37 %ig) zugegeben, wobei darauf geachtet wurde, daß die Temperatur von 70°C nicht überschritten wurde. 15 min nach Beendigung der Formalinzugabe wurde das gebildete Phenolsulfonsäure-Vorkon densat auf 40°C abgekühlt und vorsichtig mit 500 GT Schwefelsäure (96 %ig) vermischt, wobei wiederum darauf geachtet wurde, daß die Temperatur nicht auf die Werte über 70°C anstieg. Nach kurzem Rühren entstand eine homogene Lösung, die nachfolgend als "Säure 2" bezeichnet wird.

Aus 100 GT Quarzsand H 33, 1,2 GT der Harzlösung 2 und 0,7 GT der Säure 2 wurde eine Formstoffmischung hergestellt, die dann in der in Beispiel 1 beschriebenen Weise mit Dimethylformal zu gehärteten Kernen verarbeitet wurde. Die Biegefestigkeiten dieser Kerne sind ebenfalls in der beigefügten Tabelle angegeben.

Beispiel 3

In einem Reaktor wurden 940 GT Phenol, 495 GT Paraformaldehyd und 15 GT Zinkacetat auf 80°C erwärmt. Nach 15 h Reaktionszeit bei dieser Temperatur entstand ein Methylolgruppen enthaltendes Phenolharz, das etwa 5 Gew.-% freies Phenol und etwa 2 Gew.-% freies Formaldehyd aufwies.

330 GT dieses Harzes wurden sodann mit 470 GT einer etwa 70 %igen wässrigen Resorchinlösung in Anwesenheit von 3,5 GT Oxalsäure umgesetzt, und zwar 1 h lang bei 80°C. Danach wurden 25 GT Resorcinpech zugemischt, und nach Abkühlen auf 40°C wurden weiterhin 41 GT Monoethylenglycol und 33 GT Melaminharz (Luwipal 066) sowie noch 3,6 GT Aminosilan zugefügt. nach intensivem Rühren entstand eine homogene Lösung, die nachfolgend als "Harzlösung 3" bezeichnet wird.

Aus 100 GT Quarzsand H33, 1,0 GT der Harzlösung 3 und 0,6 GT Cumolsulfonsäure (95 %ig) wurde eine Formstoffmischung hergestellt, die dann in der in Beispiel 1 beschriebenen Weise mit Dimethylformal zu gehärteten Kernen verarbeitet wurde. Die Biegefestigkeiten dieser Kerne sind ebenfalls in der beigefügten Tabelle angegeben.

Beispiel 4

In einem Reaktor wurden 330 GT Resorcin, 126 GT Melamin, 7,5 GT Zinkacetat und 200 GT Wasser auf 50°C erwärmt, bis eine homogene Lösung entstand. Dann werden 162 GT Formalin (37 %ig) zugefügt, und der Ansatz wurde so lange auf 50°C gehalten, bis der freie Formaldehydwert auf Null sank. Es entstand eine Lösung, deren Wassergehalt durch Vakuumdestillation auf 25 Gew.-% eingestellt (abgesenkt) wurde. Diese Lösung wurde dann noch mit 0,3 Gew.-% Aminosilan versetzt und bildete die "Harzlösung 4".

Aus 100 GT Quarzsand H33, 1,2 GT Harzlösung 4 und 0,7 GT Säure 2 (gemäß Beispiel 2) wurde eine Formstoffmischung hergestellt, die dann in der in Beispiel 1 beschriebenen Weise mit Dimethylformal zu gehärteten Kernen verarbeitet wurde. Die Biegefestigkeiten dieser Kerne sid ebenfalls in der beigefügten Tabelle angegeben.

**Tabelle**          Biegefestigkeiten in N/cm²

| Mischung | sofort verarbeitet | | 4 h gelagert | |
|---|---|---|---|---|
| Prüfung | sofort | nach 1 h | sofort | nach 1 h |
| Beispiel 1 | 250 | 530 | 250 | 510 |
| Beispiel 2 | 300 | 540 | 270 | 680 |
| Beispiel 3 | 180 | 450 | 160 | 420 |
| Beispiel 4 | 210 | 420 | 180 | 400 |

**Ansprüche**

1.) Kalthärtendes Formstoff-Bindemittel zur Herstellung von kunstharzgebundenen Gießerei-Formkörpern, dadurch gekennzeichnet, daß das Bindemittel eine Lösung von aldehyd-reaktiven Phenolkörpern sowie gasförmige Acetale als Reaktionspartner und starke Säuren als Katalysatoren umfaßt, wobei die Phenolkörper und die Säuren in der Formstoffmischung vorgelegt und die Acetale der abgeformten Formstoffmischung zugeführt sind.

2.) Bindemittel nach Anspruch 1, dadurch gekennzeichnet, daß die aldehyd-reaktiven Phenolkörper in wasserhaltiger Lösung vorliegen.

3.) Bindemittel nach Anspruch 1 oder 2, dadurch gekennzeichnet, daß die aldehyd-reaktiven Phenolkörper Resorcin und/oder ein Resorcinprodukt enthalten.

4.) Bindemittel nach Anspruch 3, dadurch gekennzeichnet, daß das Resorcinprodukt Resorcinpech ist.

5.) Bindemittel nach Anspruch 3, dadurch gekennzeichnet, daß das Resorcinprodukt ein Resorcin-Formaldehyd-Vorkondensat ist.

6.) Bindemittel nach Anspruch 3, dadurch gekennzeichnet, daß das Resorcinprodukt ein Phenol-Resorcin-FormaldehydVorkondensat ist.

7.) Bindemittel nach Anspruch 3, dadurch gekennziechnet, daß ein Teil des Resorcins oder des Resorcinprodukts durch Melamin oder ein Melamin-Formaldehyd-Vorkondensat ersetzt ist.

8.) Bindemittel nach einem der Ansprüche 1 - 7, dadurch gekennzeichnet, daß als Säure Schwefelsäure und/oder Sulfonsäuren eingesetzt sind.

9.) Bindemittel nach einem der Ansprüche 1 - 8, dadurch gekennzeichnet, daß als Acetale leicht flüchtige Formale eingesetzt sind.

10.) Verfahren zur Herstellung von kunstharzgebundenen Formkörpern, insbesondere Gießerei-Formteilen, mit dem Bindemittel nach einem der Ansprüche 1 - 9, dadurch gekennzichnet, daß aus einem Formengrundstoff, der Lösung des aldehyd-reaktiven Phenolkörpers und der Saüre eine Formstoffmischung hergestellt und durch Durchleiten des Acetals mittels eines Trägergases zur Aushärtung gebracht wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 100 232 (WHITEHEAD BROTHERS) <br> * Ansprüche 1, 10, 13 * <br> --- | 1,3-7 | B 22 C 1/20 <br> B 22 C 9/12 |
| A | GB-A-1 203 743 (CENTRO SPERIMENTALE METAL) <br> * Anspruch 9 * <br> --- | 1,3-7 | |
| A | GB-A-1 264 930 (MATALON) <br> * Ansprüche 1, 4, 5, 14, 18-21 * <br> ----- | 1,3-7 | |

RECHERCHIERTE
SACHGEBIETE (Int. Cl.4)

B 22 C 1/00
B 22 C 9/00
C 08 G 79/00

Der vorliegende Recherchenbericht wurde für alle Patentansprüche erstellt

| Recherchenort | Abschlußdatum der Recherche | Prüfer |
|---|---|---|
| BERLIN | 01-02-1988 | GOLDSCHMIDT G |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
    Dokument

EPO FORM 1503 03.82 (P0403)